# EUROPEAN PATENT APPLICATION

(11) **EP 4 603 977 A1**
(43) Date of publication of application: **20.08.2025**
(21) Application number: 25157591.6
(22) Date of filing: 13.02.2025
(51) Int. Cl.: G06F 11/10

(54) **SYSTEMS AND METHODS FOR ERROR CORRECTION CODE SCHEME WITH INVERSION-BASED MITIGATION OF BIASED MANUFACTURING DEFECT**

(30) Priority: 16.02.2024 US 202463554464 P; 29.01.2025 US 202519039961
(71) Applicant: Everspin Technologies, Inc., Chandler, Arizona 85226 (US)
(72) Inventor: SHILTSEV, Mikhail, Chandler, Arizona (AZ), 85226 (US); WILLIAMS, Jacob T., Chandler, Arizona (AZ), 85226 (US); ALAM, Syed M., Chandler, Arizona (AZ), 85226 (US); RAHMAN, Iftekhar, Chandler, Arizona (AZ), 85226 (US); SANCHEZ, Pedro, Chandler, Arizona (AZ), 85226 (US); NEUMEYER, Frederick Charles, Chandler, Arizona (AZ), 85226 (US)
(74) Representative: Eisenführ Speiser

(57) **Abstract**

A method of correcting one or more errors in a memory device, the method performed by one or more controllers. The method may receive data. The method may further write bits at a memory location to a first state. The method may further read respective values of the bits at the memory location. The method may further determine an error correction based on the respective values. The method may further write the received data to the memory location as received data or inverted data, based on the error correction.

## Description

### CROSS-REFERENCE TO RELATED APPLICATION

This application claims benefit to U.S. Provisional Patent Application No. 63/554,464 filed February 16, 2024, the entire contents of which are incorporated herein by reference.

### TECHNICAL FIELD

Various embodiments of the present disclosure relate generally to systems and methods for correcting an error in a memory device, and, more particularly, to systems and methods for an error correction code scheme with inversion-based mitigation of biased manufacturing defects of memory devices.

### INTRODUCTION

In general, a memory system may include a memory device for storing data and a host (or controller) for controlling operations of the memory device. Memory devices may be classified into, e.g., volatile memory (such as, e.g., DRAM or SRAM) and non-volatile memory (such as EEPROM, FRAM (Ferroelectric RAM), PRAM (Phase-change memory), MRAM (magnetoresistive memory), RRAM/ReRAM (resistive memory) and Flash memory).

A magnetoresistive stack used in a memory device (e.g., MRAM) includes at least one non-magnetic layer (for example, at least one dielectric layer or a non-magnetic yet electrically conductive layer) disposed between a "fixed" magnetic region and a "free" magnetic region, each including one or more layers of ferromagnetic materials. Information is stored in the magnetoresistive memory stack by switching, programming, and/or controlling the direction of magnetization vectors in the magnetic layer(s) of the free magnetic region. The direction of the magnetization vectors of the free magnetic region may be switched and/or programmed (for example, through spin orbit torque (SOT) and/or spin transfer torque (STT)) by application of a write signal (e.g., one or more current pulses) adjacent to, or through, the magnetoresistive memory stack.

The manufacturing process of such a memory device may create a biased source of errors. For example, during manufacture of magnetic tunnel junction (MTJ) devices such as, for example, magnetoresistive random access memory (MRAM) devices, a failure mode of bits may be biased toward a low-resistance state (e.g., partial shorts). These errors may be mitigated separately, enhancing the effectiveness of general error correction. Some error correction techniques use a two-layer error correction code (ECC) without inversion, which may correct errors, but is only guaranteed two corrections and one detection in a first layer and one correction in a second layer. Some error correction techniques use parity generation and inversion with an algorithm for self-reference sensing and down-current write with two-bit correction.

### BRIEF DESCRIPTION OF DRAWINGS

In the course of the detailed description that follows, reference will be made to the appended drawings. The drawings show different aspects of the present disclosure and, where appropriate, reference numerals illustrating like structures, components, materials, and/or elements in different figures are labeled similarly. It is understood that various combinations of the structures, components, and/or elements, other than those specifically shown, are contemplated and are within the scope of the present disclosure.

Moreover, there are many embodiments of the present disclosure described and illustrated herein. The present disclosure is neither limited to any single aspect nor embodiment thereof, nor to any combinations and/or permutations of such aspects and/or embodiments. Moreover, each of the aspects of the present disclosure, and/or embodiments thereof, may be employed alone or in combination with one or more of the other aspects of the present disclosure and/or embodiments thereof. For the sake of brevity, certain permutations and combinations are not discussed and/or illustrated separately herein; however, all permutations and combinations are considered to fall within the scope of the present inventions.
FIG. 1 depicts an exemplary block diagram of a memory interconnection system, according to an aspect of the present disclosure.
FIG. 2 depicts an exemplary flow diagram for error correction, according to an aspect of the present disclosure.
FIG. 3 depicts an exemplary flow diagram for error correction, according to an aspect of the present disclosure.
FIG. 4 depicts an exemplary block diagram for error correction, according to an aspect of the present disclosure.
FIG. 5 depicts exemplary plots representing array data, according to an aspect of the present disclosure.
FIG. 6 depicts an exemplary comparison plot, according to an aspect of the present disclosure.

Again, there are many embodiments described and illustrated herein. The present disclosure is neither limited to any single aspect nor embodiment thereof, nor to any combinations and/or permutations of such aspects and/or embodiments. Each of the aspects of the present disclosure, and/or embodiments thereof, may be employed alone or in combination with one or more of the other aspects of the present disclosure and/or embodiments thereof. For the sake of brevity, many of those combinations and permutations are not discussed separately herein.

### DETAILED DESCRIPTION

Detailed illustrative aspects are disclosed herein. However, specific structural and functional details disclosed herein are merely representative for purposes of describing example embodiments of the present disclosure. The present disclosure may be embodied in many alternate forms and should not be construed as limited to only the embodiments set forth herein. Further, the terminology used herein is for the purpose of describing particular embodiments only and is not intended to be limiting of exemplary embodiments described herein.

When the specification makes reference to "one embodiment" or to "an embodiment," it is intended to mean that a particular feature, structure, characteristic, or function described in connection with the embodiment being discussed is included in at least one contemplated embodiment of the present disclosure. Thus, the appearance of the phrases, "in one embodiment" or "in an embodiment," in different places in the specification does not constitute a plurality of references to a single embodiment of the present disclosure.

As used herein, the terms "comprises," "comprising," or any other variation thereof, are intended to cover a non-exclusive inclusion, such that a process, method, article, or apparatus that comprises a list of elements does not include only those elements, but may include other elements not expressly listed or inherent to such process, method, article, or apparatus. The term "exemplary" is used in the sense of "example," rather than "ideal."

As used herein, the singular forms "a," "an," and "the" are intended to include the plural forms as well, unless the context clearly indicates otherwise. It also should be noted that in some alternative implementations, the features and/or steps described may occur out of the order depicted in the figures or discussed herein. For example, two steps or figures shown in succession may instead be executed substantially concurrently or may sometimes be executed in the reverse order, depending upon the functionality/acts involved. In some aspects, one or more described features or steps may be omitted altogether, or may be performed with an intermediate step therebetween, without departing from the scope of the embodiments described herein, depending upon the functionality/acts involved.

In one aspect, the present disclosure is directed to techniques and implementations for correcting errors in memory devices including, e.g., non-volatile or "permanent" memory capable of maintaining data when a power supply is deactivated (e.g., magnetic memories or magnetic random access memories or MRAMs). Though the description below makes reference to magnetoresistive memory devices (e.g., MRAM), the inventions may be implemented in other memory devices including, but not limited to, EEPROM, FRAM, PRAM, RRAM/ReRAM and/or Flash memory.

One or more embodiments of the present disclosure may provide error prevention by detection of the partial shorts and modifying the data to reduce errors. One or more embodiments may use an ECC based on the Bose-Chaudhuri-Hocquenghem (BCH) algorithm, for example, or one or more other error correction algorithms, to correct up to a limited number (e.g., three) of error bits within a word while allowing for complete inversion to protect against partial shorts. One or more embodiments may use a hardware construction to produce ECC codewords that may be inverted without losing general bit protection.

One or more embodiments may determine whether to invert by first programming all bits to a high-resistance state, and when there are any bits remaining in a low-resistance state, the low-resistance bits are compared against the data. When the inversion bit is shorted or all partial shorts disagree with the data, the inverted data is programmed during a down programming operation. This provides protection against one stuck bit at the cost of one bit of parity, while allowing ECC to correct other errors.

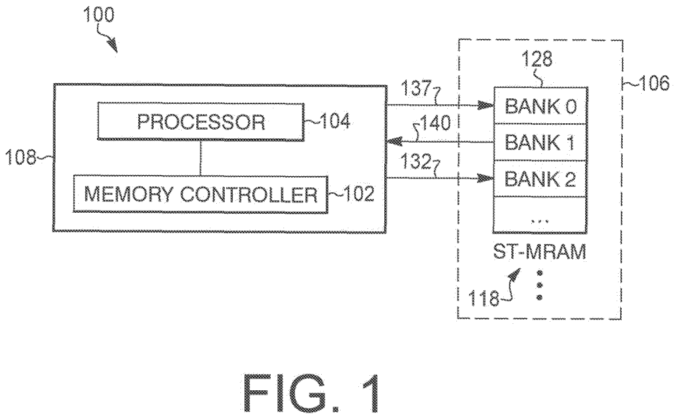

FIG. 1 is a block diagram of an exemplary memory system 100 including a memory controller 102 that performs data transfer between a processor 104 and the memory 106. The memory controller 102 and the processor 104 may reside on the same chip 108, or they may reside on separate chips (not shown). The memory 106 may include a non-volatile memory 118 using an MTJ device, preferably ST-MRAM, for data storage. The non-volatile memory 118 may include a plurality of non-volatile memory banks 128.

A chip select (CS) line 132 may provide a CS signal from the memory controller 102 to the non-volatile memory 118. An address bus 137 and a data line 140 may couple the memory controller 102 to the non-volatile memory 118. Other control and clock signals may exist between the memory controller 102 and non-volatile memory 118 that are not shown in FIG. 1. Furthermore, an address bus 137 and a data line 140 may include multiple lines or bits.

In operation, an ACTIVATE operation for an address can be initiated in non-volatile memory 118. Subsequently, the memory controller 102 initiates READ or WRITE operations in the non-volatile memory 118. The data from non-volatile memory 118 is read after the non-volatile memory ACTIVATE operation is complete.

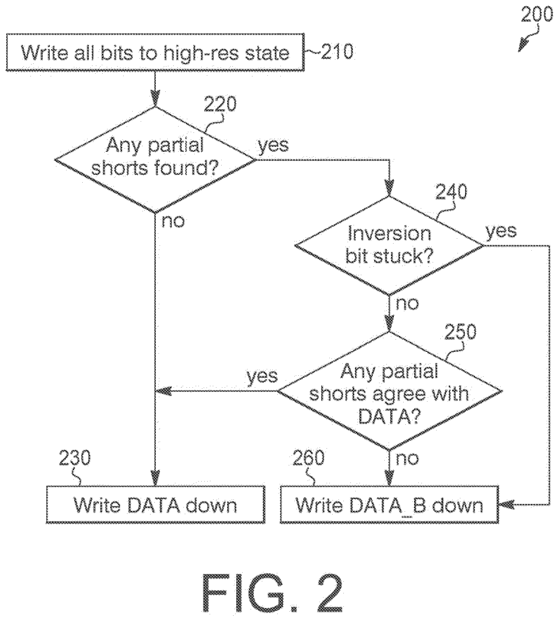

FIG. 2 depicts an exemplary flow diagram for error correction, according to an aspect of the present disclosure. Prior to the start of flow diagram 200 (prior to step 210), one or more controllers (e.g., memory controller 102) may receive DATA. Step 210 may include one or more controllers writing all bits to a memory location (e.g., memory 106) in a high-resistance state (e.g., a logic 1). A low-resistance state may have a low resistance relative to a high-resistance state. A high-resistance state may be a value corresponding to a logic 1, and a low-resistance state may be a value corresponding to a logic 0. Alternatively, a high-resistance state may be a value corresponding to a logic 0, and a low-resistance state may be a value corresponding to a logic 1. Upon writing all bits to a high-resistance state, the flow diagram 200 may proceed to step 220.

At step 220, one or more controllers may determine (e.g., via a search and/or comparison) whether any of the bits at the memory location remain in a second state, for example, a low-resistance state (e.g., a logic 0) that is different from the first state. A bit at the memory location that remains in a second state after an attempt to write the bit to a first state may indicate the bit has a partial short, and is stuck in a second state. Accordingly, the bit may be in error when data is written to the memory location. When a result of the determination indicates that none of the bits at the memory location remain in the low-resistance state (e.g., "NO" at step 220), where all bits at the memory location were successfully written to a logic 1, the flow diagram may proceed to step 230. At step 230, one or more controllers may write the DATA to the memory location in the same state that the DATA was received (i.e., without inverting the values of the received DATA). For example, one or more controllers may write DATA "01101101" as received to the memory location.

When a result of the determination of step 220 indicates that one or more of the bits at the memory location remain in the low-resistance state (e.g., "YES" at step 220) where one or more bits at the memory location remain a logic 0 following the write to logic 1, the flow diagram may proceed to step 240.

At step 240, the one or more controllers may determine whether the inversion bit included in the one or more of the bits at the memory location remains in the low-resistance state. For example, the inversion bit may be set to logic 0 when DATA is inverted, and may be set to logic 1 when DATA is not inverted. When the result of the determination indicates the inversion bit remains in the low-resistance state (e.g., "YES" at step 240), which incorrectly indicates that data is inverted, the flow diagram 200 may proceed to step 260. At step 260, the one or more controllers may invert DATA to DATA_B to match the inversion bit state (e.g., logic 0 which indicates data inversion), and write DATA_B to the memory location. For example, one or more controllers may receive DATA "01101101" and write inverted DATA (DATA_B) as "10010010" to the memory location, where the trailing "0" is the inversion bit indicating the data is inverted from the original received state. However, when the result of the determination indicates the inversion bit does not remain in the low-resistance state (e.g., "NO" at step 240), the flow diagram 200 may proceed to step 250.

Further to the example above, the one or more controllers may receive DATA "01101101" and may write a pulse as "11111111". When a partial short (logic 0) is found as "11111110", which may indicate a partial short in an inversion bit, the one or more controllers may invert the DATA and write inverted DATA_B due to the partial short in the inversion bit. When a partial short is found as "11111101", the one or more controllers may not invert the DATA and write DATA due to the partial short (logic 0) matching the corresponding bit (logic 0) in DATA. When a partial short is found as "11111011", the one or more controllers may invert the DATA and write inverted DATA_B due to the partial short not matching the corresponding bit in DATA. When a partial short is found as "11111001", the one or more controllers may not invert the DATA and write DATA because one of the partial shorts matches the corresponding bit in DATA.

At step 250, the one or more controllers may determine whether one or more of the bits at the memory location that remain in the low-resistance state each correspond with a respective bit in DATA. For example, the one or more controllers may determine whether a stuck bit (e.g., logic 0) at position four at the memory location is the same (e.g., logic 0) as the bit at position four in DATA. When the result of the determination indicates the one or more of the bits at the memory location that remain in the low-resistance state each correspond with a respective bit in DATA (e.g., "YES" at step 250), the flow diagram may proceed to step 230. At step 230, the one or more controllers may write the DATA to the memory location as received.

However, when the result of the determination indicates the one or more of the bits at the memory location that remain in the low-resistance state do not each correspond with a respective bit in DATA (e.g., "NO" at step 250), the flow diagram may proceed to step 260. At step 260, the one or more controllers may invert DATA to DATA_B, and write DATA_B to the memory location.

During the generation of the BCH encoding scheme for error correction, with respect for FIG. 2 as described above, an H-matrix (parity generator) may be generated for a power of 2 size data word. For example, when the data word is not a power of 2, rows of the matrix may be removed by treating the unnecessary rows as a permanent 0. Additionally, binary matrix multiplication may refer to a summation of a set of bits modulo 2, selected by the 1 bits in each parity column. Therefore, by selecting a subset of rows where the number of bits in each column of the parity generator may sum to an odd number, the inversion of the data may also invert the parity bit.

With this property, when a partial short (e.g., a state corresponding to a low resistance due to a manufacturing defect or anomaly) is detected during the programming flow and the partial short disagrees with the data or parity to be programmed, the entire ECC word may be inverted so that the partial short would agree with the bit state to be programmed. This inversion bypasses any need to regenerate the parity because the inverted data word is also a valid BCH data word. Finally, to determine whether the data has been inverted, one bit is used to hold a constant value. The one or more controllers may invert an output when the constant value is determined to be flipped after reading and correcting the BCH word.

Flow diagram 200 may provide several improvements, benefits, and advantages over some systems. For example, for each ECC word, inversion may provide elimination of one partial short bit error, which may allow the ECC to fix other errors. Inversion may be provided at a cost of one bit to correct one additional error, as opposed to a ceiling of a binary logarithm of a number of additional data bits per bit correction (e.g., 4:1) in BCH ECC. Additionally, a higher number of BCH ECC correction bits may cost more time and area as a design becomes more complex. Other ECC schemes may scale differently. One or more embodiments may provide an invertible ECC that computes parity one time regardless of inversion. Flow diagram 200 may incur a cost of more average power per area, but may not cost more time. Flow diagram 200 may provide a bit error rate improvement of two orders of magnitude over some systems.

Additionally, more partial shorts may be corrected by determining a population count of agreeing partial shorts and disagreeing partial shorts, which may provide a number of corrections equal to one half of a number of partial shorts. This population count may increase an area cost, but may be implemented using combinational logic.

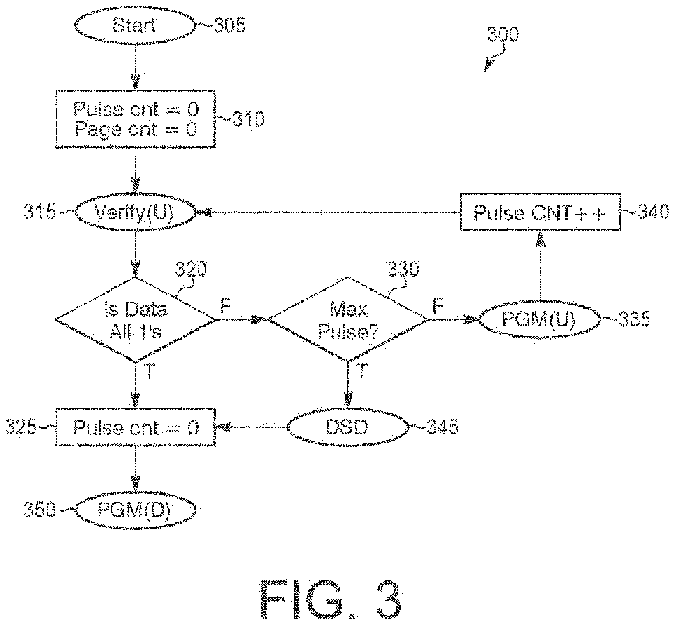

FIG. 3 depicts an exemplary flow diagram for error correction, according to an aspect of the present disclosure. The flow diagram 300 may describe a program up flow and may start at step 305. Flow diagram 300 may include operations performed by one or more controllers. Step 305 may include receiving data with ECC parity already computed. The flow diagram 300 may proceed to step 310. At step 310, a pulse count may be given a value of zero and a page count may be given a value of zero. At step 315, verification using ECC with the inversion off may be determined. Step 315 may include writing all bits to a memory location in a high-resistance state (e.g., logic 1). The verification may be similar to step 210 of the flow diagram 200 as described in FIG. 2.

At step 320, the flow diagram 300 may determine whether all bits of the data are set to the high-resistance state. If "TRUE" at step 320, the flow diagram 300 may proceed to step 325. At step 325, the pulse count may be determined. If the pulse count is equal to zero, as given at step 310, the flow diagram may proceed to step 350. At step 350, the parity generation matrix (PGM) may be in a down state, meaning the program up flow has passed.

If a determination at step 320 is made that one or more bits of the data are not in a high-resistance state (e.g., "FALSE"), for example, one or more bits have a value corresponding to a logic 0, the flow diagram may proceed to step 330. At step 330, determination of the maximum pulse of the program up flow may be detected. If at step 330, the maximum pulse of the program up flow is determined to be "TRUE", the flow diagram 300 may proceed to step 345. At step 345, a digital short detect (DSD) may be determined. DSD may determine bits that read as zeros as partial shorts. Upon completion of the step 345, the flow diagram may proceed to steps 325 and 350, as similarly described above.

If "FALSE" at step 330, the flow diagram may proceed to step 335. At step 335, the PGM may be determined in the up state, meaning the program up flow has failed. In response to the PGM being in the up state, the flow diagram may proceed to step 340. At step 340, the pulse count may be increased and operations may proceed to step 315. The flow diagram 300 may proceed similarly as described above until all bits of the data are in the high-resistance stat before proceeding to steps 325 and 350 as described above.

For example, at step 320, if one or more bits of the data are not in a high-resistance state (e.g., one or more bits have a value corresponding to a logic 0), there may be an assumption that the up-write yields logic 1 and everything may be invertible. The one or more remaining bits, or bits in a low-resistance state (e.g., logic 0), may be stuck and may agree or disagree with the data. The data in the PGM may include stuck bits = {1,1,1,1,0,0,1}, when data = {x,x,x,x,0,1,x}. Inversion of the data may allow for a selection of the lesser of two error modes. For instance, stuck bits = {... 1,1,0,0,0,0,1,...}, when data = {...,x,x,1,1,1,0,x,...}.

The flow diagram 300 may include an ECC parity encoding computed through an XOR tree. In doing so, when an even number of XOR terms are present, the inversion of the data may leave the one or more bits of the data in the same form. When an odd number of XOR terms are present, the inversion of the data may invert the one or more bits. The ECC may include a 24/24 odd parity including a dimension of D[152:0] and ~D[152:0] as valid symbols. The inversion bit may be set after the ECC calculates the parity with an unset inversion bit, where the inversion process may set the inversion bit. Upon completion, the data may be read as inverted data after the ECC decode process.

The flow diagram 300 may further detect if at least one bit agrees and at least one bit disagrees. When all bits disagree, the bits may be inverted. For example, when one short has been detected, the ECC may include zero errors with a 0.5 error expectancy. If the short agrees, the bits are not inverted and if the short disagrees, the bits are inverted.

When two shorts are detected, the ECC may include one error max with a 0.5 error average and a 1 error expectancy. If the two shorts both agree, the bits are not inverted and there is no error. If the one short agrees and one short disagrees, the bits are not inverted and there is one error. If both shorts disagree, the bits are inverted and there is no error.

When three shorts are detected, the ECC may include a 1.125 errors average and a 1.5 error expectancy. If all three shorts agree, the bits are not inverted and there is not error. If two shorts agree and one disagrees, the bits are not inverted and there is one error. If one short agrees and two shorts disagree, the bits are not inverted and there are two errors. If all three shorts disagree, the bits are inverted and there are no errors.

When four shorts are detected, the ECC may try to avoid uncorrectable error and may include a 1.75 error average and a 2 error expectancy. If all shorts agree, the bits are not inverted and there are no errors. If three shorts agree and one short disagrees, the bits are not inverted and there is one error. If two shorts agree and two shorts disagree, the bits are not inverted and there are two errors. If the one short agrees and three shorts disagree, the bits are not inverted and there are three errors. If all shorts disagree, the bits are inverted and there are no errors.

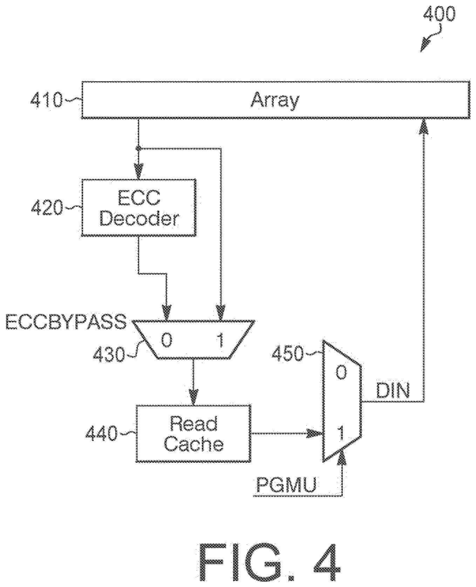

FIG. 4 depicts an exemplary block diagram for error correction, according to an aspect of the present disclosure. The block diagram 400 may describe the write path to update data in the array. The block diagram 400 may include an array 410, ECC decoder 420, ECC bypass 430, read cache 440, and decision block 450. The array 410 may be a portion of memory, such as memory 106 as described in FIG. 1, for storing received data. The data received in array 410 may be transmitted to the ECC decoder 420. The ECC decoder 420 may be configured to determine if one or more shorts are detected and determine if the received data is to be written as received or inverted at a memory location, for example, correcting up to n errors (e.g., up to three). The ECC bypass 430 may include a decision block configured to compare the decoded data in a first state and a second state (e.g., logic 1 and logic 0). The read cache 440 may be configured to select which bits are correctly set and may be blocked from the up or down program pulse. For example, during an up-write, any bit that reads back as a logic 1 may not be pulsed, and during the down-write, any bit that is equal to the user data may not change. Additionally, for a write that does not fully fill an ECC word, the previous data in the word may remain the same. When the data is read directly without any error correction, the errors may be copied into each word, which may become permanent, as parity may need to be regenerated. The decision of read cache 440 may be transmitted to the decision block 450. The decision block 450 may be configured to receive the result from the read cache 440 and compare the result to a PGM, where the PGM may be similar to the determination made in step 335 of flow diagram 300 as described in FIG. 3 above. The result of the comparison at the decision block 450 may be send back to the array 410. The process described in FIG. 4 may be repeated as necessary (e.g., based on the number of detected shorts).

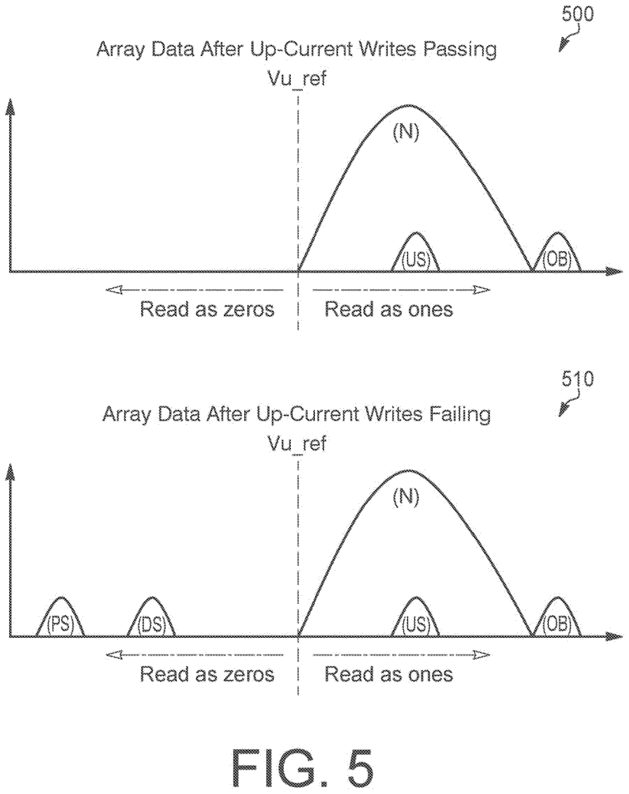

FIG. 5 depicts exemplary graphics representing array data, according to an aspect of the present disclosure. Graph 500 may describe the array data after the up-current writes passes as a result of step 320 after a determination of all bits within the received data remains in a first state (e.g., logic 1), being "TRUE" as described in FIG. 3 above. Graph 510 may describe the array data after the up-current writes failing as a result of step 330 after a determination of the maximum pulse of the program up flow being "TRUE" as described in FIG. 3 above. For graph 500 and graph 510, the X axis may represent the measured bit voltage during a read process, and the Y axis may represent a probability that a bit may be read at the voltage following programming (e.g., to an "up" state). In addition, voltage may be replaced with another parameter for measuring the determined sensing structure in the array, for example, resistance of a bit or current drawn may be implemented.

In FIG. 5, Vu_ref may be a voltage reference for an "up" state, N may refer to a normal state, DS may refer to "Down Stuck" and may be able to flip if pulsed again, US may refer to "Up Stuck" but may be able to flip if pulsed again, PS may refer to "Partial Short" that is a permanent manufacturing defect, and OB may refer to "Open Bit" that is a permanent manufacturing defect.

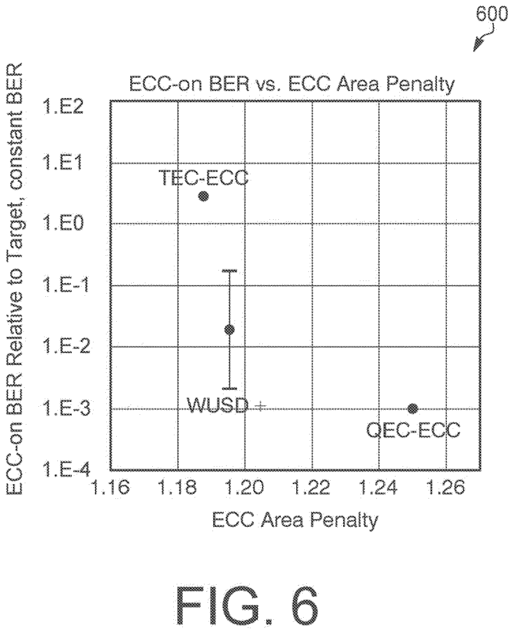

FIG. 6 depicts an exemplary comparison graphic, according to an aspect of the present disclosure. Graph 600 may describe the post-correction bit error rate (given a constant raw bit error rate) versus the area penalty using a calculation between the triple error correction (TEC), the quad error correction (QEC), ECC and the write-up short detection (WUSD) in addition to the TEC. Graph 600 may provide an ECC area penalty based on the number of bits used per data bit. The result of calculating the WUSD may provide an acceptable post-correction bit error rate (BER) for less array area. The advantage of this calculation may save engineering time, as each additional bit to correct may cause design concerns. For example, correcting four errors may take longer than correcting three errors. However, timing may require utilizing the worst-case scenario, and thereby potentially slowing down the read speed.

In one embodiment, the present disclosure is drawn to a method of correcting one or more errors in a memory device, the method performed by one or more controllers and comprising: receiving data; writing bits at a memory location to a first state; reading respective values of the bits at the memory location; determining an error correction based on the respective values; and writing the received data to the memory location as received data or inverted data, based on the error correction.

Various aspects of the present disclosure may also include one or more of the following features: wherein the determining the error correction includes one or more of: determining whether one or more of the bits at the memory location are in a second state different from the first state, determining whether one or more inversion bits for the memory location are in the second state, or determining whether one or more of the bits at the memory location that are in the second state correspond to a state of the received data; wherein: the determining the error correction includes: determining that none of the bits at the memory location are in a second state different from the first state; and the writing the received data to the memory location includes: writing the received data to the memory location as the received data; wherein: the determining the error correction includes: determining that one or more of the bits at the memory location are in a second state different from the first state, and determining that one or more inversion bits for the memory location are in the second state; and the writing the received data to the memory location includes: writing the received data to the memory location as the inverted data; wherein: the determining the error correction includes: determining that one or more of the bits at the memory location are in a second state different from the first state, determining that no inversion bits for the memory location are in the second state, and determining that one or more of the bits at the memory location that are in the second state correspond to a state of the received data; and the writing the received data to the memory location includes: writing the received data to the memory location as the received data; wherein: the determining the error correction includes: determining that one or more of the bits at the memory location are in a second state different from the first state, determining that no inversion bits for the memory location are in the second state, and determining that none of the bits at the memory location that are in the second state correspond to a state of the received data; and the writing the received data to the memory location includes: writing the received data to the memory location as the inverted data; wherein the first state is a value corresponding to a logic 1.

In another embodiment, the present disclosure is drawn to a method of correcting one or more errors in a memory device, the method performed by one or more controllers and comprising: receiving data; writing bits at a memory location from a first state to a second state; determining whether one or more of the bits at the memory location remain in the first state; upon determining that one or more of the bits at the memory location remain in the first state, determining whether one or more inversion bits for the memory location remain in the first state; upon determining that no inversion bits for the memory location remain in the first state, determining whether one or more of the bits at the memory location that remain in the first state correspond to a state of the received data at a corresponding bit location; and upon determining that one or more of the bits at the memory location that remain in the first state do not correspond to the state of the received data at the corresponding bit location, inverting values of the received data and writing the inverted values of the received data to the memory location.

Various aspects of the present disclosure may also include one or more of the following features: upon determining that one or more of the bits at the memory location do not remain in the first state, writing the received data to the memory location; upon determining that one or more inversion bits for the memory location remain in the first state, inverting values of the received data, and writing the inverted values of the received data to the memory location; upon determining that one or more of the bits at the memory location that remain in the first state correspond to the state of the received data, writing the received data to the memory location; wherein the first state is a value corresponding to a logic 0 and the second state is a value corresponding to a logic 1; wherein the first state is a low-resistance state and the second state is a high-resistance state relative to the low-resistance state.

In yet another embodiment, the present disclosure is drawn to a method of correcting one or more errors in a memory device, the method performed by one or more controllers and comprising: receiving data; writing bits at a memory location to a first state; determining whether one or more of the bits at the memory location remain in a second state different from the first state; and writing the received data to the memory location as received data or inverted data in response to determining the one or more bits at the memory location remain in the second state.

Various aspects of the present disclosure may also include one or more of the following features: wherein: the determining whether one or more of the bits at the memory location remain in the second state includes: determining that one or more of the bits at the memory location do not remain in the second state; and the writing the received data to the memory location includes: writing the one or more of the bits as the received data; wherein: the determining whether one or more of the bits at the memory location remain in the second state includes: determining that one or more of the bits at the memory location remain in the second state, and determining whether the one or more bits at the memory location that remain in the second state include an inversion bit for the memory location; wherein: the determining whether one or more of the bits at the memory location remain in the second state includes: determining that one or more of the bits at the memory location remain in the second state, and determining that the one or more bits at the memory location that remain in the second state do not correspond to a state of the received data; and the writing the received data to the memory location includes: inverting the received data; and writing the inverted received data to the memory location; wherein: the determining whether one or more of the bits at the memory location remain in the second state includes: determining that one or more of the bits at the memory location remain in the second state, determining that the one or more bits at the memory location that remain in the second state do not include an inversion bit for the memory location, and determining whether the one or more bits at the memory location correspond to a state of the received data; wherein: the determining whether one or more of the bits at the memory location remain in the second state includes: determining that one or more of the bits at the memory location remain in the second state, determining that the one or more bits at the memory location that remain in the second state do not include an inversion bit for the memory location, and determining that the one or more bits at the memory location that remain in the second state correspond to a state of the received data; and the writing the received data to the memory location includes: writing the received data to the memory location; wherein: the determining whether one or more of the bits at the memory location remain in the second state includes: determining that one or more of the bits at the memory location remain in the second state, determining that the one or more bits at the memory location that remain in the second state do not include an inversion bit for the memory location, and determining that the one or more bits at the memory location that remain in the second state do not correspond to a state of the received data; and the writing the received data to the memory location includes: inverting the received data; and writing the inverted received data to the memory location.

Other embodiments of the disclosure will be apparent to those skilled in the art from consideration of the specification and practice of the embodiment(s) disclosed herein. It is intended that the specification and examples be considered as exemplary only, with a true scope and spirit of the embodiment(s) being indicated by the following claims.

While exemplary embodiments have been presented above, it should be appreciated that many variations exist. Furthermore, while the description includes references to MRAM devices, the teachings may be applied to other memory devices having different architectures in which the same concepts can be applied. Thus, the particular embodiments disclosed above are illustrative only and should not be taken as limitations, as the embodiments may be modified and practiced in different but equivalent manners apparent to those skilled in the art having the benefit of the teachings herein. Accordingly, the foregoing description is not intended to limit the disclosure to the particular form set forth, but on the contrary, is intended to cover such alternatives, modifications and equivalents as may be included within the spirit and scope of the inventions as defined by the appended claims so that those skilled in the art should understand that they can make various changes, substitutions and alterations without departing from the spirit and scope of the inventions in their broadest form.

The foregoing description of the inventions has been described for purposes of clarity and understanding. It is not intended to limit the inventions to the precise form disclosed. Various modifications may be possible within the scope and equivalence of the application.

## Claims

1. A method of correcting one or more errors in a memory device, the method performed by one or more controllers and comprising:
receiving data;
writing bits at a memory location to a first state;
reading respective values of the bits at the memory location;
determining an error correction based on the respective values; and
writing the received data to the memory location as received data or inverted data, based on the error correction.

2. The method of claim 1, wherein the determining the error correction includes one or more of:
determining whether one or more of the bits at the memory location are in a second state different from the first state,
determining whether one or more inversion bits for the memory location are in the second state, or
determining whether one or more of the bits at the memory location that are in the second state correspond to a state of the received data.

3. The method of claim 1, wherein:
the determining the error correction includes:
determining that none of the bits at the memory location are in a second state different from the first state; and
the writing the received data to the memory location includes:
writing the received data to the memory location as the received data.

4. The method of claim 1, wherein:
the determining the error correction includes:
determining that one or more of the bits at the memory location are in a second state different from the first state, and
determining that one or more inversion bits for the memory location are in the second state; and
the writing the received data to the memory location includes:
writing the received data to the memory location as the inverted data.

5. The method of claim 1, wherein:
the determining the error correction includes:
determining that one or more of the bits at the memory location are in a second state different from the first state,
determining that no inversion bits for the memory location are in the second state, and
determining that one or more of the bits at the memory location that are in the second state correspond to a state of the received data; and
the writing the received data to the memory location includes:
writing the received data to the memory location as the received data.

6. The method of claim 1, wherein:
the determining the error correction includes:
determining that one or more of the bits at the memory location are in a second state different from the first state,
determining that no inversion bits for the memory location are in the second state, and
determining that none of the bits at the memory location that are in the second state correspond to a state of the received data; and
the writing the received data to the memory location includes:
writing the received data to the memory location as the inverted data.

7. The method of claim 1, wherein the first state is a value corresponding to a logic 1.

8. A method of correcting one or more errors in a memory device, the method performed by one or more controllers and comprising:
receiving data;
writing bits at a memory location from a first state to a second state;
determining whether one or more of the bits at the memory location remain in the first state;
upon determining that one or more of the bits at the memory location remain in the first state, determining whether one or more inversion bits for the memory location remain in the first state;
upon determining that no inversion bits for the memory location remain in the first state, determining whether one or more of the bits at the memory location that remain in the first state correspond to a state of the received data at a corresponding bit location; and
upon determining that one or more of the bits at the memory location that remain in the first state do not correspond to the state of the received data at the corresponding bit location, inverting values of the received data and writing the inverted values of the received data to the memory location.

9. The method of claim 8, further comprising:
upon determining that one or more of the bits at the memory location do not remain in the first state, writing the received data to the memory location.

10. The method of claim 8, further comprising:
upon determining that one or more inversion bits for the memory location remain in the first state, inverting values of the received data, and writing the inverted values of the received data to the memory location.

11. The method of claim 8, further comprising:
upon determining that one or more of the bits at the memory location that remain in the first state correspond to the state of the received data, writing the received data to the memory location.

12. The method of claim 8, wherein the first state is a value corresponding to a logic 0 and the second state is a value corresponding to a logic 1.

13. The method of claim 8, wherein the first state is a low-resistance state and the second state is a high-resistance state relative to the low-resistance state.

14. A method of correcting one or more errors in a memory device, the method performed by one or more controllers and comprising:
receiving data;
writing bits at a memory location to a first state;
determining whether one or more of the bits at the memory location remain in a second state different from the first state; and
writing the received data to the memory location as received data or inverted data in response to determining the one or more bits at the memory location remain in the second state.

15. The method of claim 14, wherein:
the determining whether one or more of the bits at the memory location remain in the second state includes:
(i) determining that one or more of the bits at the memory location do not remain in the second state; and
the writing the received data to the memory location includes:
writing the one or more of the bits as the received data, or
(ii) determining that one or more of the bits at the memory location remain in the second state, and
determining whether the one or more bits at the memory location that remain in the second state include an inversion bit for the memory location, or
(iii) determining that one or more of the bits at the memory location remain in the second state, and
determining that the one or more bits at the memory location that remain in the second state do not correspond to a state of the received data; and
the writing the received data to the memory location includes:
inverting the received data; and
writing the inverted received data to the memory location, or
(iv) determining that one or more of the bits at the memory location remain in the second state,
determining that the one or more bits at the memory location that remain in the second state do not include an inversion bit for the memory location, and
determining whether the one or more bits at the memory location correspond to a state of the received data, or
(v) determining that one or more of the bits at the memory location remain in the second state,
determining that the one or more bits at the memory location that remain in the second state do not include an inversion bit for the memory location, and
determining that the one or more bits at the memory location that remain in the second state correspond to a state of the received data; and
the writing the received data to the memory location includes:
writing the received data to the memory location, or
(vi) determining that one or more of the bits at the memory location remain in the second state,
determining that the one or more bits at the memory location that remain in the second state do not include an inversion bit for the memory location, and
determining that the one or more bits at the memory location that remain in the second state do not correspond to a state of the received data; and
the writing the received data to the memory location includes:
inverting the received data; and
writing the inverted received data to the memory location.
